# NEUE EUROPÄISCHE PATENTSCHRIFT

(11) **EP 0 979 179 B2**
(45) Veröffentlichungstag und Bekanntmachung des Hinweises auf die Entscheidung über den Einspruch: **15.11.2006**
(45) Hinweis auf die Patenterteilung: 11.09.2002
(21) Anmeldenummer: 99908864.4
(22) Anmeldetag: 09.02.1999
(51) Int. Cl.: B60N 2/16, B60N 2/22

(54) **Sitzversteller**
Seat adjuster
Dispositif de réglage de siège

(30) Priorität: 10.02.1998 DE 29802055 U
(43) Veröffentlichungstag der Anmeldung: 16.02.2000
(73) Patentinhaber: Schwarzbich, Jörg, 33615 Bielefeld (DE)
(72) Erfinder: Schwarzbich, Jörg, 33615 Bielefeld (DE)
(74) Vertreter: TER MEER - STEINMEISTER & PARTNER GbR
(86) Internationale Anmeldenummer: PCT/EP1999/000833
(87) Internationale Veröffentlichungsnummer: WO 1999/041101

(56) Entgegenhaltungen:
- EP-A- 0 743 221
- DE-A- 3 445 009
- DE-A- 3 608 858
- DE-A- 3 815 602
- DE-A- 19 726 257
- DE-C- 19 548 809

## Beschreibung

Die Erfindung betrifft einen Sitzversteller, beispielsweise zum Verstellen der Sitzhöhe oder der Rükkenlehnenneigung bei einem Kraftfahrzeugsitz.

Es sind Sitzverstellermit einem Verriegelungsmechanismus bekannt, durch den der verstellbare Teil des Sitzes in unterschiedlichen Positionen formschlüssig an einem feststehenden Teil verriegelt werden kann. Wenn der Benutzer die Sitzposition zu verstellen wünscht, muß zunächst der Verriegelungsmechanismus entriegelt werden, bevor sich der verstellbare Teil des Sitzes entweder durch unmittelbare körperliche Einwirkung auf den verstellbaren Teil oder aber mit Hilfe eines Verstellorgans wie etwa eines Handrades oder Hebels oder dergleichen verstellen läßt. Wenn die gewünschte neue Position erreicht ist, läßt man den Verriegelungsmechanismus in dieser Position wieder einrasten.

Aus DE-A-38 15 602 und DE-A-197 26 257 sind Sitzversteller bekannt, bei denen der Verriegelungsmechanismus selbsttätig ausrastet, wenn das Verstellorgan in der einen oder anderen Richtung aus der Ausgangsstellung heraus bewegt wird, und selbsttätig wieder einrastet, wenn das Verstellorgan in die Ausgangsstellung zurück bewegt wird.

Sitzversteller dieser Art haben jedoch den Nachteil, daß nur eine stufenweise Verstellung nach Maßgabe der diskreten Rastpositionen des Verriegelungsmechanismus möglich ist. Außerdem ist der Bedienungskomfort eingeschränkt, weil sich der Verriegelungsmechanismus insbesondere unter Last nur schwer lösen läßt und beim Wiedereinrasten in der neuen Position leicht verklemmen oder hängenbleiben kann undioder mit einem unangenehmen Geräusch abrupt in die Rastposition einfällt. Weiterhin läßt sich ein solcher Verriegelungsmechanismus nur schwer mit einem Getriebe kombinieren, das die von Hand auf das Verstellorgan ausgeübte Betätigungskraft verstärkt.

Andererseits sind gattungsgemäße Sitzversteller bekannt, die anstelle eines Verriegelungsmechanismus eine zwischen dem verstellbaren Teil und dem feststehenden Teil wirkende Bremse aufweisen, mit der sich der verstellbare Teil in stufenlos wählbaren Positionen in beiden Richtungen blockieren läßt. Zum Lösen der Bremse ist ein Freischaltorgan vorgesehen, das mit dem Verstellorgan gekoppelt ist so daß die Bremse selbsttätig gelöst wird, wenn das Verstellorgan betätigt und die Kraft von dem Verstellorgan auf den verstellbaren Teil übertragen wird, während bei unbetätigtem Verstellorgan und bei einem Kraftfluß in entgegengesetzter Richtung die Bremse automatisch blockiert (DE-A-195 18 434).

Sitzversteller dieser Art ermöglichen eine stufenlose Verstellung des Sitzes und zeichnen sich durch einen hohen Bedienkomfort aus, da sich das Lösen der Bremse bei Betätigung des Verstellorgans sowie der Eingriff der Bremse nach Erreichen der gewünschten Einstellposition selbsttätig und in einer für den Benutzer kaum wahrnehmbaren Weise vollzieht.

Bei Sitzverstellern dieser letztgenannten Art kann es jedoch bei einer über einen längeren Zeitraum in derseiben Richtung wirkenden Belastung zu einem Kriechen der Bremse und damit zu einer allmählichen unerwünschten Verstellung des Sitzes kommen, insbesondere dann, wenn der dauernd wirkenden Kraft noch eine Vibration überlagert ist, wie es bei Kraftfahrzeugen während der Fahrt regelmäßig der Fall ist. Beispielsweise ist bei Sitzhöhenverstellern häufig eine starke Feder vorgesehen, die den Sitz nach oben vorspannt und so das Körpergewicht des Benutzers teilweise ausbalanciert, so daß die bei einem Versteilvorgang aufzuwendene Kraft verringert wird Wenn der Sitz besetzt ist, überwegt die abwärts gerichtete Gewichtskraft, so daß sich der Sitz aufgrund des Kriecheffekts der Bremse allmähren absenkt. Bei unbelastetem Sitz überwiegt dagegen die aufwärts gerichtete Kraft der Feder, so daß sich der Sitz allmählich nach oben bewegt. In beiden Fällen ist von Zeit zu Zeit ein Nachstellen der Sitzposition erforderlich.

Aus der FR 1 312 614 ist ein Sitzversteller der beschriebenen Art bekannt, bei dem eine Zusatzverriegelung vorgesehen ist. Diese begrenzt den Kriecheffekt, indem sie an bestimmten Sitzpositionen einrastet und die Rückenlehne des Sitzes gegen Bewegung verriegelt. Die Zusatzverriegelung wird durch einen seitlich am Stellhebel angebrachten Zapfen gebildet, der an vorgesehenen Einrastpositionen in eine Bohrung eintritt und den Stellhebel verrastet. Zum Lösen der Zusatzverriegelung muß durch eine Querbewegung des Stellhebels der Zapfen aus der Bohrung herausgezogen werden, woraufhin sich der Stellhebel in die gewünschte Verstellrichtung bewegen läßt.

Aus der DE 195 48 809 C1 ist ein Sitzversteller nach dem Obebegriff des Anspruchs 1 bekannt, der auf einem Taumelgetriebe zum Verstellen eines Beschlagteils für eine Rückenlehne basiert. Das Taumelgetreibe besteht aus einem Außenzahnkranz des verstellbaren Beschlagteils und einem in diesen eingreifenden Innenzahnkranz eines festen Beschlagteils. Der Außenzahnkranz ist mittels Keilsegmenten, die zwischen mit den Zahnkränzen verbundenen Lagerringen einen Exzenterabschnitt bilden, exzentrisch in Bezug auf den Innenzahnkranz gelagert. Um ein Kriechen des Taumelgetriebes zu verhindern, ist eine formschlüssige Sperrung der Keilsegmente an dem festen Beschlagteil vorgesehen. Zum Verstellen des Sitzverstellers wird durch Drehen eines Mitnehmers um die Achse des Außenzahnkranzes die Sperrung aufgehoben, bevor der Mitnehmer die Keilsegmente verschiebt und dadurch das Taumelgetriebe antreibt. Bei einer ganzen Umdrehung des Mitnehmers wird der Außenzahnkranz lediglich um einen Bruchteil einer Umdrehung verdreht. Der Außenzahnkranz und der Mitnehmer führen dabei eine Taumelbewegung um die Achse des festen Innenzahnkranzes aus.

Aufgabe der Erfindung ist es, einen stufenlosen Sitzversteller mit Zusatzverriegelung zu schaffen, der einen hohen Bedienkomfort aufweist

Diese Aufgabe wird mit den in Anspruch 1 angegebenen Merkmalen gelöst.

Da der Sitz in erster Linie durch die Bremskraft der Bremse in der eingestellten Position gehalten wird, braucht die Zusatzverriegelung nur einen Teil der wirkenden Kräfte aufzunehmen. Sie kann deshalb sehr klein, leichtgängig und kurzhubig ausgebildet sein, so daß das Ein- und Ausrasten der Zusatzverriegelung für den Benutzer kaum spürbar ist und somit den Bedienungskomfort nicht beeinträchtigt. Dennoch läßt sich unter Last der Kriecheffekt der Bremse wirksam unterdrücken, so daß der Sitz zuverlässig in der eingestellten Position bleibt.

Bei Fahrzeugsitzen, bei denen das Gurtschloß für den Sicherheitsgurt unmittelbar am Sitz angebracht ist, trägt die erfindungsgemäße Zusatzverriegelung darüberhinaus zur Erhöhung der Unfallsicherheit bei. Bei einem solchen Sitz muß nämlich der Sitzhöhenversteller in der Lage sein, bei einem Aufprall die durch den Sichermeitsgurt übertragenen Trägheitskräfte aufzunehmen damit der Sitz nicht nachgibt. Ein Teil dieser Kräfte wird erfindungsgemäß durch die Zusatzverriegelung aufgenommen, so daß die Bremse bei einem Aufprall weniger belastet wird.

Bei dem verstellbaren Teil im Sinne des Anspruchs 1 kann es sich um den Sitz in seiner Gesamtheit oder um einen Teil des Sitzes, beispielsweise die Rükkenlenne handeln, es kann sich jedoch auch um ein Getriebeelement eines Untersetzungsgetriebes handeln, über das das Verstellorgan auf den Sitz wirkt.

Vorteilhafte Ausgestaltungen der Erfindung ergeben sich aus den Unteransprüchen.

Die Zusatzverriegelung kann unmittelbar zwischen dem feststehenden Teil und dem versteilbaren Teil wirken. In diesem Fall ist entweder an dem feststehenden Teil oder an dem verstellbaren Teil eine Vielzahi von Rasten vorgesehen, in die ein geeignetes Verriegelungsorgan eingreift, wie es bei mechanischen Verriegelungseinrichtungen wie Klinkengesperren. Ratschenkupplungen und dergleichen allgemein üblich ist. Da die Zusatzverriegelung nur eine verhältnismäßig geringe Haltekraft aufzuweisen braucht können die Rasten sehrfein gestuft ausgebildet sein, so daß eine sehr große Anzahl von Rastpositionen realisiert wird. Nach einem Verstellvorgang wird der verstellbare Teil zunächst allein durch die Bremse in Position gehalten, und es ist nicht erforderlich, daß die Zusatzverriegelung dann sofort einrastet. Erst wenn der verstellbare Teil aufgrund des Kriecheffekts der Bremse seine Lage etwas verändert fällt die Zusatzverriegelung sehr langsam und für den Benutzer kaum spürbar ein, und der verstellbare Teil wird endgültig in der erreichten Position verriegelt.

Bei der Bremse des Sitzverstellers kann es sich beispielsweise um eine Schlinglederbremse oder um eine Freilaufbremse handeln. In diesen Fällen dient das Freischaltelement zugleich als ein Antriebselement mit dem die Betätigungskraft des Verstellorgans auf den verstellbaren Teil übertragen wird. Da bei solchen Bremsen das Freischaltelement mechanisch mit dem verstellbaren Teil gekoppelt ist kommt es bei einem Kriechen oder Ablaufen der Bremse zwangsläufig auch zu einer Bewegung des Freischaltelements. Bei Sitzverstellern mit einer solchen Bremse ist es deshalb auch möglich, die Zusatzverriegelung zwischen dem feststehenden Teil und dem Freischaltelement wirken zu lassen um das Kriechen der Bremse zu unterbinden.

Im Folgenden wird ein bevorzugtes Ausführungsbeispiel der Erfindung anhand der Zeichnung näher erläutert.

Es zeigen:
Figur 1 einen axialen Schnitt durch einen Sitzversteller:
Figur 2 einen Schnitt längs der Linie II-II in Figur 1:
Figuren 3-5 eine Zusatzverriegelung des Sitzverstellers nach Figuren 1 und 2 in unterschiedlichen Positionen: und
Figur 6 eine vereinfachte Darstellung analog zu Figur 2 für eine abgewandelte Ausführungsform der Erfindung.

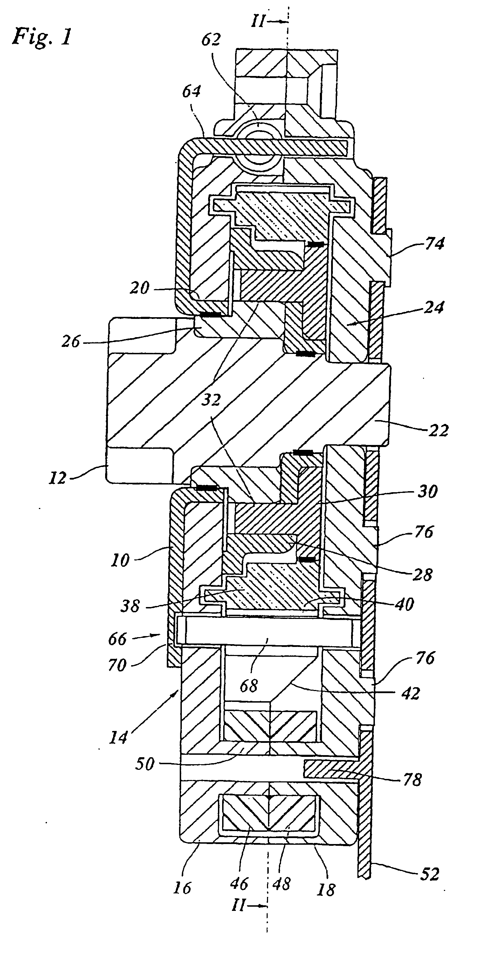

Der in Figur 1 gezeigte Sitzversteller dient beispielsweise zum Verstellen der Sitzhöhe eines Kraftfahrzeugsitzes und weist als feststehenden Teil eine Grundplatte 10 auf, die starr an einem karosseriefesten Teil des Kraftfahrzeugs zu befestigen ist. Als verstellbarer Teil ist ein Ritzel 12 vorgesehen, das über ein nicht gezeigtes Getriebe die Verstellung der Sitzhöhe des Kraftfahrzeugsitzes bewirkt.

Ein Gehäuse 14 des Sitzverstellers wird durch zwei Halbschalen 16, 18 aus Kunststoff gebildet und ist drehbar auf einer an der Grundplatte 10 ausgebildeten Nabe 20 gehalten. Das Ritzel 12 ist einstückig an einem Ende einer Welle 22 ausgebildet, die drehbar in dem Gehäuse 14 gelagert ist. Auf der Welle 22 ist eine Freilaufbremse 24 angeordnet, die es gestattet, die Welle 22 und damit das Ritzel 12 in beiden Drehrichtungen in bezug auf die Grundplatte 10 zu blockieren.

Die Freilaufbremse 24 umfaßt einen Innenring 26, einen Außenring 28 und ein Freischaltrad 30. Der Innenring 26 ist drehbar auf der Welle 22 gelagert und drehfest mit der Nabe 20 der Grundplatte 10 verkeilt. Der Außenring 28 ist drehfest mit der Welle 22 verkeilt und ist topfförmig ausgebildet, so daß er den Innenring 26 mit radialem Abstand umgibt. Das Freischaltrad 30 ist axial außerhalb des Außenrings 28 angeordnet und drehbar auf einem Bund des Außenrings 28 gelagert. Mehrere Klauen 32 sind in gleichmäßigen Winkelabständen an dem Freischaltrad 30 ausgebildet und ragen durch Öffnungen des Außenrings 28 hindurch in den Zwischenraum zwischen dem Innenring 26 und dem Außenring 28. Die Öffnungen (ohne Bezugszeichen) des Außenrings 28 sind in Umfangsrichtung derart bogenförmig gestaltet, daß sie die Klauen 32 in Umfangsrichtung mit gewissem Spiel aufnehmen.

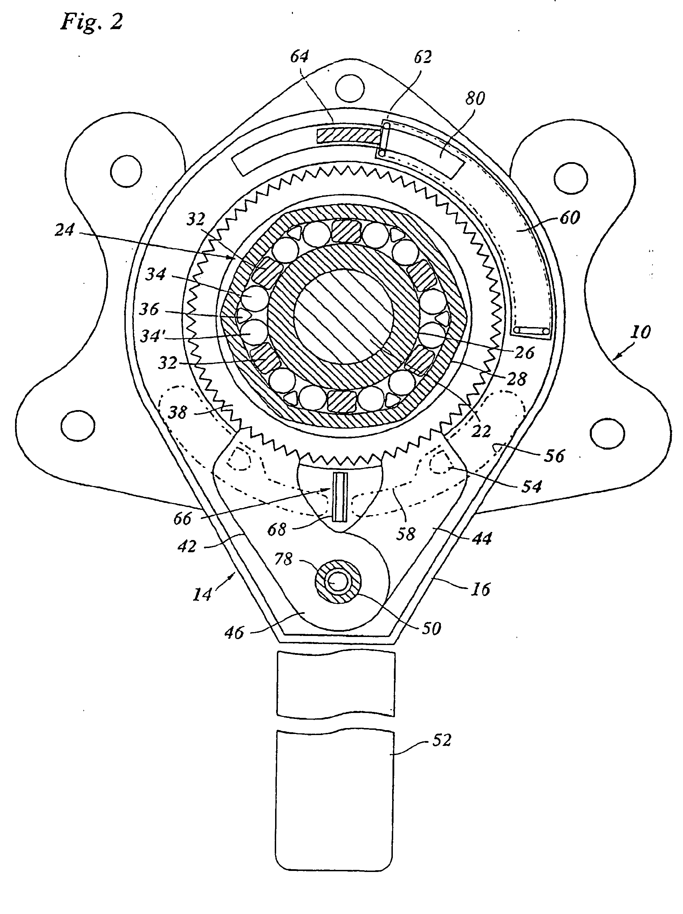

Wie in Figur 2 gezeigt ist, sind in dem Zwischenraum zwischen dem Innenring 26 und dem Außenring 28 in Umfangsrichtung zwischen je zwei benachbarten Klauen 32 zwei Wälzkörper 34. 34' und ein Klemmelement 36 angeordnet. Das Klemmelement 36 liegt in Umfangsrichtung zwischen den beiden Wälzkörpern 34, 34' und besteht aus elastischem Material, beispielsweise aus einem eigenelastischen Kunststoff, so daß es die Wälzkörper 34. 34' auseinanderdrückt und mit den jeweils angrenzenden Klauen 32 in Anlage hält. Der Innenquerschnitt des Außenrings 28 ist nicht genau kreisförmig, sondern hat die Form eines Sechsecks mit stark gerundeten Ecken. Die Positionen der Klemmkörper 36 entsprechen den Ecken dieses Sechsecks, so daß sich der Zwischenraum zwischen dem Innenring und dem Außenring von den Klemmkörpern 36 aus in beiden Richtungen verjüngt.

Wenn über das Ritzel 12 und die Welle 22 ein Drehmoment auf den Außenring 28 wirkt, beispielsweise im Uhrzeigersinn in Figur 2, so rollt der Wälzkörper 34' an der Innenfläche des Außenrings 28 und an der Außenfläche des feststehenden Innenrings 26 ab. Bei einer Verdrehung des Außenrings 28 bleibt daher der Wälzkörper 34' etwas gegenüber dem Außenring 28 zurück, so daß er aufgrund der Verjüngung des Zwischenraums klemmt und blockiert. Auf diese Weise werden der Außenring 28 und damit auch die Welle 22 und das Ritzel 12 selbsthemmend an dem Innenring 26 blokkiert, der seinerseits starr an der Grundplatte 10 gehalten ist. Wenn das Drehmoment im Gegenuhrzeigersinn in Figur 2 auf den Außenring 28 wirkt, so haben die Wälzkörper 34 die selbe Funktion wie zuvor die Wälzkörper 34'. Der verstellbare Teil (Ritzel 12) wird somit in beiden Richtungen an dem feststehenden Teil (Grundplatte 10) blockiert.

Wenn dagegen ein Drehmoment auf das Freischaltrad 30 wirkt, beispielsweise im Uhrzeigersinn in Figur 2, so drücken zunächst die Klauen 32 auf den Wälzkörper 34', da, wie erwähnt, die Klauen 32 in den Öffnungen des Außenrings 28 etwas Spiel haben. Auf diese Weise wird verhindert, daß die Wälzkörper 34' in dem Zwischenraum zwischen Innen- und Außenring blockieren, und der Außenring 28 kann folglich durch die Klauen 32 des Freischaltrades im Uhrzeigersinn mitgenommen werden, wobei die Wälzkörper 34 und 34' zwischen der Außenfläche des Innenrings 26 und der Innenfläche des Außenrings 28 abrollen. Entsprechendes gilt auch bei einem in entgegengesetzter Richtung wirkenden Drehmoment. Die Drehung des Außenrings 28 wird über die Welle 22 auf das Ritzel 12 übertragen. So läßt sich mit Hilfe des Freischaltrades 30 das Ritzel 12 in jeder gewünschten Verstellrichtung antreiben. Sobald das auf das Freischaltrad 30 wirkende Drehmoment aussetzt, wird das Ritzel 12 durch die Freilaufbremse 24 wieder in der erreichten Position blockiert.

Die Freilaufbremse 24 ist von einem drehbar in dem Gehäuse 14 gelagerten Zahnrad 38 umgeben, das, wie Figur 1 zeigt, drehfest mit dem äußeren Umfang des Freischaltrades 30 verkeilt ist. Ein Zahnkranz 40 am äußeren Umfang des Zahnrades 38 steht mit zwei Klinken 42, 44 in Zahneingriff, die jeweils mit einem Nabenabschnitt 46, 48 schwenkbar auf einer gemeinsamen gehäusefesten Achse 50 gehalten sind. Die Klinken 42, 44 sind spiegelbildlich zur Zeichenebene in Figur 1 angeordnet, so daß in Figur 1 von der Klinke 44 nur der Nabenabschnitt 48 zu erkennen ist.

An der Außenschale 18 des Gehäuses 14 ist ein als Verstellorgan dienender Hebel 52 angeordnet.

Wie strichpunktiert in Figur 2 angedeutet wird, tragen die Klinken 42, 44 jeweils im Bereich des freien Endes einen Nocken 54, der durch eine Öffnung der Halbschale 16 des. Gehäuses in eine bogenförmige Führungskulisse 56 der Grundplatte 10 eingreift.

Die Klinken 42, 44 werden durch nicht gezeigte Federn mit dem Zahnrad 38 in Eingriff gehalten. Wenn der Hebel 52 im Uhrzeigersinn in Figur 2 verschwenkt wird, so werden das Gehäuse 14 und die Klinken 42, 44 um die durch die Narbe 20 der Grundplatte definierte Achse (Mittelachse der Welle 22) verschwenkt. Das Drehmoment wird in diesem Fall durch die in Drehrichtung vorauslaufende Klinke 42 auf das Zahnrad 38 und weiter auf das Freischaltrad 30 übertragen, so daß die Freilaufbremse 24 gelöst wird und die Welle 22 und das Ritzel 12 gedreht werden. Der Nocken 54 der Klinke 44 läuft dabei auf eine Führungskontur 58 der Führungskulisse 56 auf. Hierdurch wird die Klinke 44 von dem Zahnrad 38 weggeschwenkt, so daß der Zahneingriff aufgehoben wird. Wenn dann der Hebel 52 im Gegenuhrzeigersinn wieder in die Ausgangsposition zurückgeschwenkt wird, steht nur noch die bei dieser Drehrichtung nachschleppende Klinke 42 mit dem Zahnrad 38 in Eingriff. Aufgrund der Steigung der Zahnflanken kann die Klinke 42 jedoch leicht aus dem Zahneingriff mit dem Zahnrad 38 gelöst werden. Die Eingriffskraft reicht deshalb nicht aus, das Zahnrad 38 und das Freischaltrad 30 mitzudrehen. Folglich werden die Welle 22 und das Ritzel 12 durch die Freilaufbremse 24 in der erreichten Position blockiert, und der Hebel 52 und das Gehäuse 14 bewegen sich allein in die Ausgangsposition zurück, während die Klinke 42 ratschenförmig über den Zahnkranz des Zahnrads 38 gleitet. Durch mehrfaches Wiederholen des oben beschriebenen Vorgangs können somit die Welle 22 und das Ritzel 12 schrittweise in Uhrzeigerrichtung in Figur2verstelltwerden. Entsprechend ist eine schrittweise Verstellung in entgegengesetzter Richtung möglich, indem der Hebel 52 aus der in Figur 2 gezeigten Ausgangsposition heraus im Gegenuhrzeigersinn verschwenkt wird.

Jede der beiden Halbschalen 16, 18 des Gehäuses 14 bildet außerhalb des Zahnrades 38 einen bogenförmigen Kanal 60, der eine Schraubenfeder 62 aufnimmt. Die Schraubenfedern 62 stützen sich jeweils mit einem Ende an der betreffenden Halbschale des Gehäuses und mit dem anderen Ende an einem von der Grundplatte 10 abgewinkelten Anschlag 64 ab. Wenn das Gehäuse 14 zusammen mit dem Hebel 52 in der einen oder anderen Richtung aus der in Figur 2 gezeigten Ausgangsposition verschwenkt wird, wird somit jeweils eine der beiden Schraubenfedern 62 komprimiert und somit eine elastische Rückstellkraft erzeugt, die das Gehäuse und den Hebel 52 wieder in die Ausgangspostition zurückstellt.

Wenn auf das Ritzel 12 und die Welle 22 über einen längeren Zeitraum hinweg ein gleichsinniges Drehmoment wirkt, beispielsweise aufgrund des Eigengewichts des Fahrzeugsitzes und des Gewichts des darauf sitzenden Benutzers, kann es inbesondere bei zusätzlich auftretenden Erschütterungen zu einem allmählichen Kriechen der Freilaufbremse 24 kommen, das heißt, die Wälzkörper, 34, 34' laufen allmählich an dem Innenring 26 ab, so daß der Außenring 28 dem permanent wirkenden Drehmoment nachgibt und sich allmählich relativ zu dem Innenring verdreht. Da der Außenring 28 starr mit dem Zahnrad 38 verbunden ist, das seinerseits mit den beiden Klinken 42, 44 in Eingriff steht, wird das Drehmoment über die Klinken 42, 44 und den Achse 50 auf das Gehäuse 14 und den Hebel 52 übertragen, so daß sich auch das Gehäuse und der Hebel 52 in der betreffenden Richtung mitdrehen. Diese unerwünschte selbsttätige Verstellung des Sitzverstellers wird erfindungsgemäß durch eine Zusatzverriegelung 66 verhindert.

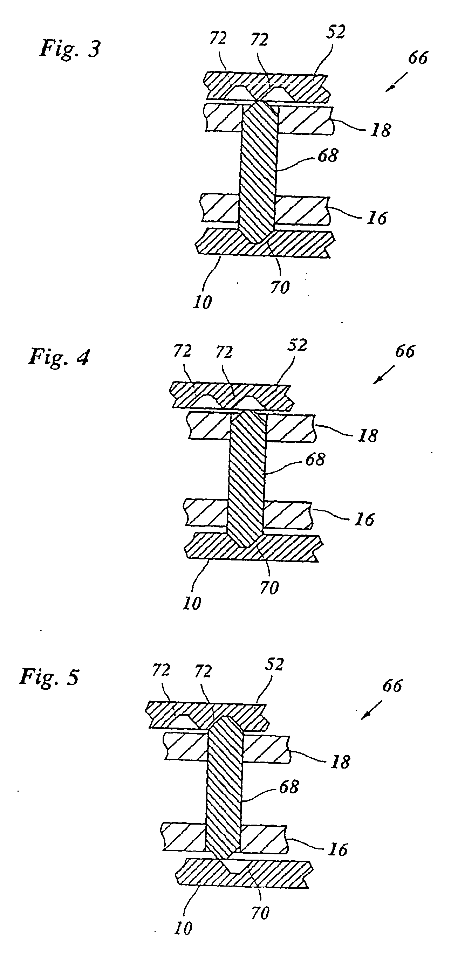

Diese Zusatzverriegelung 66 wird im gezeigten Beispiel durch einen Riegel 68 gebildet, der in dem Zwischenraum zwischen den beiden Klinken 42, 44 angeordnet ist und sich quer durch das Gehäuse 14 von dem Hebel 52 zu der auf der entgegensetzten Gehäuseseite angeordneten Grundplatte 10 erstreckt. Der Riegel 68 ist an beiden Enden dachförmig abgeschrägt und steht je nach Betriebsposition entweder mit einer Kerbe des Hebels 52 oder einer Kerbe der Grundplatte 10 in Eingriff, wie im einzelnen in Figuren 3-5 illustriert wird.

Figur 3 zeigt die Zusatzverriegelung 66 in der Normalstellung des Sitzverstellers gemäß Figur 2. In diesem Zustand greift der Riegel 68 in eine Kerbe 70 der Grundplatte 10 ein. Der Hebel 52 weist zwei Kerben 72 auf, die in diesem Zustand beiderseits des Riegels 68 liegen. Durch den Hebel 52 wird somit der Riegel 68 zwangsweise mit der Grundplatte 10 in Eingriff gehalten. Auf diese Weise werden die beiden Halbschalen 16, 18 des Gehäuses durch den Riegel 68 starr an der Grundplatte 10 verriegelt, so daß sich das Gehäuse 14 auch dann nicht relativ zu der Grundplatte 10 verstellen kann, wenn der oben beschriebene Kriecheffekt bei der Freilaufbremse 24 eintritt.

Wie aus Figur 1 hervorgeht, ist der Hebel 52 in der Nähe seines einen Endes (oben in Figur 1) durch ein Gelenk 74 schwenkbar mit der Halbschale 18 des Gehäuses 14 verbunden. Das Ende der Welle 22 sowie zwei an die Halbschale 18 angeformte Zapfen 76 werden mit gewissem Spiel in entsprechenden Öffnungen des Hebels 52 aufgenommen, und ein an dem Hebel 52 befestigter Zapfen 78 greift mit Spiel in eine Bohrung der Achse 50 ein. Somit ist der Hebel 52 in einem eng begrenzten Bereich relativ zu dem Gehäuse 14 schwenkbar. Wenn der Hebel 52 aus der in Figur 2 gezeigten Position heraus verschwenkt wird, dreht er sich deshalb zunächst allein um das Gelenk 74, bis einer der Zapfen 76 am Innenrand der betreffenden Öffnung des Hebels 52 anschlägt und/oder der Zapfen 78 an der Innenfläche der Bohrung der Achse 50 anschlägt. Erst dann wird auch das Gehäuse 14 mitgenommen, und der Hebel 52 und das Gehäuse 14 werden als eine Einheit um die Achse der Welle 22 gedreht.

Bei der anfänglichen Schwenkbewegung des Hebels 52 um das Gelenk 74 verlagern sich die Kerben 72 relativ zu dem Riegel 68, so daß beispielsweise die in Figur 4 gezeigte Position erretcht wird. Wenn dann beim weiteren Verschwenken des Hebels 52 die Halbschalen 16, 18 des Gehäuses mitgenommen werden, verschieben sich die Halbschalen 16, 18 des Gehäuses und der Riegel 68 gemeinsam relativ zu der Grundplatte 10, und die Schrägflächen der Kerbe 70 und die entsprechenden Gegenflächen des Riegels 68 drängen den Riegel 68 aus der Kerbe 70 heraus. Dabei tritt das entgegengesetzte Ende des Riegels 68 in eine der Kerben 72 des Hebels 52 ein, wie in Figur 5 gezeigt ist. Auf diese Weise wird die Zusatzverriegelung 66 aufgehoben, so daß sich das Gehäuse 14 relativ zu der Grundplatte 10 verdrehen läßt.

Wie in Figur 2 zu erkennen ist, greift der Anschlag 64 in eine bogenförmige Ausnehmung 80 des Gehäuses 14 ein. Der Schwenkbereich des Gehäuses relativ zu der Grundplatte 10 wird dadurch begrenzt, daß der Anschlag 64 an einem Ende dieser Ausnehmung 80 anschlägt. Wenn anschließend der Hebel 52 losgelassen wird, so kehrt das Gehäuse 14 aufgrund der Rückstellkraft der Schraubenfeder 62 in die Ausgangsstellung gemäß Figur 2 zurück, und die Zusatzverriegelung 66 nimmt wieder den in Figur 4 gezeigten Zustand ein.

Der Hebel 52 ist relativ zu der Halbschale 18 des Gehäuses durch eine nicht gezeigte Feder in die Ausgangsposition gemäß Figuren 2 und 3 vorgespannt. Durch die Kraft dieser Feder wird der Riegel 68 wieder aus der Kerbe 72 herausgedrängt, so daß sein entgegengesetztes Ende wieder in die Kerbe 70 der Grundplatte 10 eintritt. Wenn der Hebel 52 wieder in die in Figur 3 gezeigte Position zurückkehrt, rastet somit die Zusatzverriegelung 66 selbsttätig wieder ein.

Das oben beschriebene Ausführungsbeispiel kann auf vielfältige Weise abgewandelt werden. Beispielsweise können anstelle des einzigen Riegels 68 zwei getrennte Riegel vorgesehen sein, die, statt in eine Kerbe der Grundplatte 10 einzugreifen, mit dem äußeren Umfangsrand der Grundplatte 10 zusammenwirken und jeweils die Verriegelung in einer der beiden Verstellrichtungen bewirken.

Bei dem oben beschriebenen Ausführungsbeispeil wird der Riegel 66 durch den Hebel 52 in der Verriegelungsstellung blockiert, und nachdem der Hebel verschwenkt worden ist, bewirken die Schrägflächen der Kerbe 70 und des Riegels, daß der Riegel 68 in die Entriegelungsposition verdrängt wird. Alternativ ist es jedoch auch möglich, an dem Hebel 52 Steuerkurven auszubilden, die so mit dem Riegel 68 zusammenwirken, daß sie diesen aktiv in die Entriegelungsposition zurückziehen, wenn der Hebel verschwenkt wird.

Bei einer anderen Variante der Ausführungsform nach Figuren 1 und 2 ist der Hebel 52 relativ zu dem Gehäuse 14 um die Achse 50 schwenkbar. Das in Figur 1 obere Ende des Hebels 52 und die Grundplatte 10 sind nach oben verlängert, und der Riegel ist am in Figur 1 oberen Ende des Gehäuses angeordnet. In diesem Fall steht bei einem gegebenen Schwenkwinkel des Hebels 52 relativ zu dem Gehäuse 14 ein größerer Verstellweg für die Ver- und Entriegelung der Zusatzverriegelung zur Verfügung. Die elastische Rückstellung des Hebels 52 in die Neutralstellung relativ zu dem Gehäuse 14 kann beispielsweise durch einen verschiebbar im Gehäuse 14 gelagerten, am Ende konischen Stift erreicht werden, der in eine entsprechende konische Ausnehmung des Hebels 52 eingreift und elastisch gegen den Hebel vorgespannt ist. Diese Gestaltung des Rückstellmechanismus hat den Vorteil, daß der Hebel 52 zuverlässig in der Neutralposition zentriert wird, in der er das Entriegeln der Zusatzverriegelung blockiert.

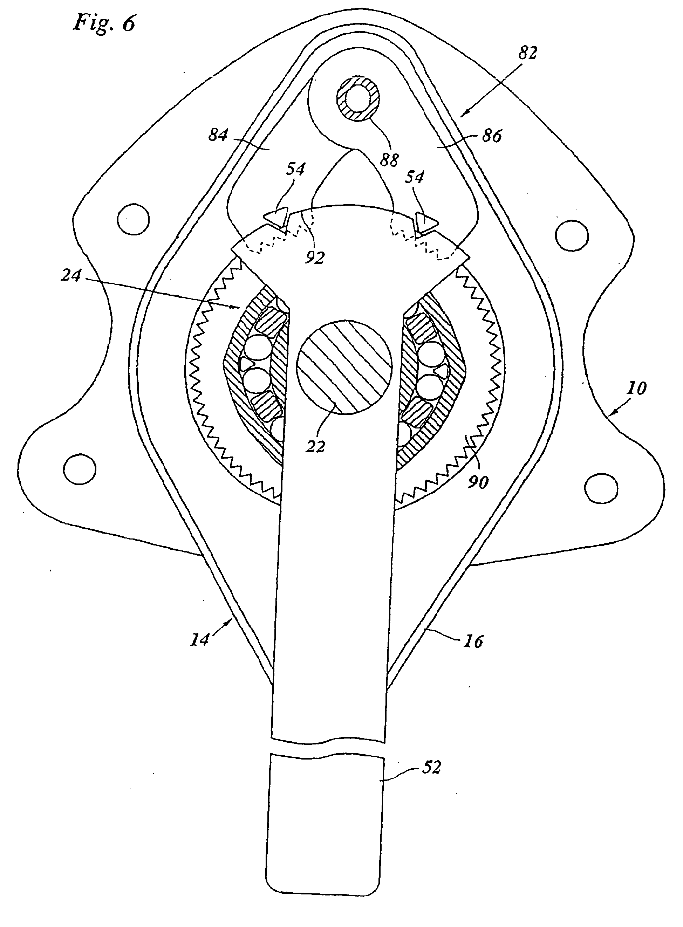

Figur 6 zeigt ein Ausführungsbeispiel bei dem die Zusatzverriegelung 82 durch zwei Klinken 84, 86 gebildet wird, die ähnlich wie die Klinken 42 und 44 gestaltet sind und diesen diametral gegenüberliegen. Die Klinken 84, 86 sind schwenkbar auf einem von der Grundplatte 10 vorspringenden Wellenzapfen 88 gelagert und stehen mit einem Zahnrad 90 in Eingriff, das am äußeren Umfang des Außenringes 28 ausgebildet ist und in einer gegenüber dem Zahnrad 38 (Figur 2) versetzten Ebene liegt. Der Hebel 52 ist in diesem Fall um die Achse der Welle 22 schwenkbar und hat am freien Ende eine symetrische Führungskontur 92, die mit den Nokken 54 der Klinken 84, 86 zusammenwirkt.

Wenn der Hebel 52 relativ zu dem Gehäuse 14 in der einen oder anderen Richtung verschwenkt wird, werden zunächst durch die Nocken 54 beide Klinken 84, 86 in die Entriegelungsposition gedrückt, so daß sich mit der Welle 22 und dem Zahnrad 90 verbundene Außenring der Freilaufbremse 24 mit Hilfe des Freischaltrades verdrehen läßt. Die Kopplung zwischen dem Hebe! 52 und dem Freischaltrad erfolgt wie in Figur 2 durch die Klinken 42, 44 und das Zahnrad 38.

Wenn der Hebel 52 und das Gehäuse 14 gemeinsam verschwenkt worden sind und dann der Hebel 52 losgelassen wird, kehrt er aufgrund der Wirkung eines nicht gezeigten elastischen Rückstellmechanismus in seine Neutralstellung relativ zu dem Gehäuse 14 zurück, und die Klinken 84, 86 rasten wieder an dem Zahnrad 90 ein und halten den Außenring 28 und damit die Welle 22 und das Ritzel 12 in der dann erreichten Position. Die Zusatzverriegelung 82 wirkt somit nicht auf das Freischaltrad, sondern arretiert den verstellbaren Teil 12, 22, 28 unmittelbar am feststehenden Teil 10. Wahlweise kann die Ausführungsform 6 doch auch so modifiziert werden, daß die Klinken 84, 86 der Zusatzverriegelung an dem mit dem Freischaltrad 30 verbundenen Zahnrad 38 angreifen.

## Patentansprüche

1. Sitzversteller mit einer zwischen einem festen Teil (10) und einem verstellbaren Teil (12, 22) wirkenden Bremse (24), mit der der verstellbare Teil stufenlos in unterschiedlichen Positionen in beiden Verstellrichtungen an dem feststehenden Teil blockierbar ist und die mittels eines Freischaltelements (30) freischaltbar ist, mit einem auf das Freischaltelement wirkenden Verstellorgan (52) zum wahlweisen Verstellen des verstellbaren Teils in beiden Richtungen und mit einer stufenweise wirkenden Zusatzverriegelung (66; 82), die bei unbetätigtem Verstellorgan (52) selbsttätig einrastet und bei Betätigung des Verstellorgans selbsttätig ausrastet, wobei durch Bewegen des Verstellorgans in eine der beiden Verstellrichtungen zunächst das Ausrasten der Zusatzverriegelung (66; 82) und dann das Verstellen des verstellbaren Teils (12, 22) bewirkbar ist, **dadurch gekennzeichnet, daß** das. Verstellorgan (52) elastisch in eine vorgegebene Neutralstellung in Bezug auf den feststehenden Teil (10) vorgespannt ist.

2. Sitzversteller nach Anspruch 1, **dadurch gekennzeichnet, daß** die Zusatzverriegelung (82) unmittelbar zwischen dem feststehenden Teil und dem verstellbaren Teil wirkt.

3. Sitzversteller nach Anspruch 1, **dadurch gekennzeichnet, daß** der verstellbare Teil (12, 22) mit dem Freischaltelement (30) in Antriebsverbindung steht und daß die Zusatzverriegelung (66) zwischen dem feststehenden Teil (10) und dem Freischaltelement (30) wirkt.

4. Sitzversteller nach Anspruch 3, **dadurch gekennzeichnet, daß** das Verstellorgan (52) mit dem Freischaltelement (30) über zwei gegensinnig wirkende Einwegkupplungen (38, 42, 44) verbunden ist, von denen jeweils eine eingerückt wird, wenn das Verstellorgan in einer Richtung aus der Neutralstellung herausbewegt wird, und daß die Zusatzverriegelung (66) einrastet, wenn sich das Verstellorgan (52) in der Neutralstellung befindet.

5. Sitzversteller nach Anspruch 4, **dadurch gekennzeichnet, daß** der verstellbare Teil eine Welle (22) aufweist, die drehbar in dem feststehenden Teil (10) gehalten ist und auf der ein Gehäuse (14) drehbar ist, das die Bremse (24) und die Einwegkupplungen aufnimmt, daß das Gehäuse (14) relativ zu dem feststehenden Teil (10) elastisch in eine Neutralstellung vorgespannt ist und daß das Verstellorgan ein Hebel (52) ist, der innerhalb eines begrenzten Bereichs relativ zu dem Gehäuse (14) schwenkbar ist und der relativ zu dem Gehäuse (14) elastisch in seine Neutralstellung vorgespannt ist.

6. Sitzversteller nach Anspruch 5, **dadurch gekennzeichnet, daß** der feststehende Teil (10) und der Hebel (52) auf entgegengesetzten Seiten des Gehäuses (14) angeordnet sind und daß die Zusatzverriegelung (66) mindestens einen Riegel (68) aufweist, der verschiebbar in dem Gehäuse (14) gehalten ist und dessen Bewegung zwischen einer Verriegelungsstellung, in der er mit dem festen Teil in Eingriff steht, und einer Entriegelungsstellung, in der er nicht mit dem festen Teil in Eingriff steht, durch den Hebel (52) steuerbar ist.

## Claims

1. Seat adjuster having a brake (24) which acts between a stationary element (10) and an adjustable element (12, 22) and by means of which the adjustable element can be locked steplessly in various positions in both adjustment directions against the stationary element and which can be released by means of a release element (30), and having an adjustment member (52), which acts on the release element, for the optional adjustment of the adjustable element in both directions, and an additional locking element (66; 82) which acts in a stepped manner and which engages automatically when the adjustment member (52) is not activated and disengages automatically when the adjustment member is activated, wherein moving the adjustment member (52) in one of the two adjustment directions causes first the disengagement of the additional locking element (66; 82) and then the adjustment of adjustable element (12, 22), **characterised in that** the adjustment member (52) is resiliently pretensioned into a predetermined neutral position relative to the stationary element (10).

2. Seat adjuster according to claim 1, **characterised in that** the additional locking element (82) acts directly between the stationary element and the adjustable element.

3. Seat adjuster according to claim 1, **characterised in that** the adjustable element (12, 22) is drivingly connected to the release element (30) and **in that** the additional locking element (66) acts between the stationary element (10) and the release element (30)

4. Seat adjuster according to claim 3, **characterised in that** the adjustment member (52) is connected to the release element (30) by means of two one-way couplings (38, 42, 44) which act in opposition and one of which is engaged in each case when the adjustment member is moved in a direction out of the neutral position, and **in that** the additional locking element (66) engages when the adjustment member (52) is in the neutral position.

5. Seat adjuster according to claim 4, **characterised in that** the adjustable element has a shaft (22) which is held rotatably in the stationary element (10) and on which a housing (14) can rotate, which housing receives the brake (24) and the one-way couplings, **in that** the housing (14) is pretensioned resiliently into a neutral position relative to the stationary element (10) and **in that** the adjustment member is a lever (52) which can pivot relative to the housing (14) within a limited range and which is resiliently pretensioned into the neutral position thereof relative to the housing (14)

6. Seat adjuster according to claim 5, **characterised in that** the stationary element (10) and the lever (52) are arranged at opposing sides of the housing (14) and **in that** the additional locking element (66) has at least one bar (68) which is held displaceably in the housing (14) and whose movement between a locking position, in which it is engaged with the stationary element, and an unlocking position, in which it is not engaged with the stationary element, can be controlled by the lever (52).

## Revendications

1. Dispositif de réglage de siège comportant un frein (24), qui agit entre une partie fixe (10) et une partie réglable (12, 22), au moyen duquel la partie réglable peut être bloquée en continu sur la partie fixe, dans différentes positions, dans les deux sens de réglage, et qui peut être débrayé au moyen d'un élément de débrayage (30), et comportant un organe de réglage (52) agissant sur l'élément de débrayage pour le réglage au choix de la partie réglable dans les deux sens, et comportant un verrouillage supplémentaire (66; 82) agissant par étapes, qui s'enclenche automatiquement, lorsque l'organe de réglage (52) n'est pas actionné, et qui se dégage automatiquement lorsque l'organe de réglage est actionné, dans lequel un mouvement de l'organe de réglage (52) dans un des deux sens de réglage entraine d'abord le dégagement du verrouillage supplémentaire (66; 82) et puis le réglage de la partie réglable (12, 22), **caractérisé en ce que** l'organe de réglage (52) est précontraint élastiquement dans une position neutre prédéterminée par rapport à la partie fixe (10).

2. Dispositif de réglage de siège selon la revendication 1, **caractérisé en ce que** le verrouillage supplémentaire (82) agit directement entre la partie fixe et la partie réglable.

3. Dispositif de réglage de siège selon la revendication 1, **caractérisé en ce que** la partie réglable (12, 22) est en liaison d'entraînement avec l'élément de débrayage (30) et **en ce que** le verrouillage supplémentaire (66) agit entre la partie fixe (10) et l'élément de débrayage (30)

4. Dispositif de réglage de siège selon la revendication 3, **caractérisé en ce que** l'organe de réglage (52) est relié à l'élément de débrayage (30), par deux accouplements unidirectionnels (38, 42, 44) agissant en sens contraire, dont l'un est embrayé lorsque l'organe de réglage est déplacé dans un sens hors de la position neutre, et **en ce que** le verrouillage supplémentaire (66) s'enclenche, lorsque l'organe de réglage (52) se trouve dans la position neutre.

5. Dispositif de réglage de siège selon la revendication 4, **caractérisé en ce que** la partie réglable comporte un arbre (22) qui est maintenu tournant dans la partie fixe (10) et sur lequel peut tourner un boîtier (14) qui reçoit le frein (24) et les accouplements unidirectionnels, **en ce que** le boîtier (14) est précontraint élastiquement dans une position neutre, par rapport à la partie fixe (10), et **en ce que** l'organe de réglage est un levier (52) qui peut pivoter par rapport au boîtier (14), à l'intérieur d'une zone limitée, et qui est précontraint élastiquement dans sa position neutre, par rapport au boîtier (14)

6. Dispositif de réglage de siège selon la revendication 5, **caractérisé en ce que** la partie fixe (10) et le levier (52) sont disposés sur des côtés opposés du boîtier (14) et **en ce que** le verrouillage supplémentaire (66) comporte au moins un verrou (68) qui est maintenu coulissant dans le boîtier (14) et dont le déplacement entre une position de verrouillage, dans laquelle il est en prise ave la partie fixe, et une position de déverrouillage, dans laquelle il n'est pas en prise avec la partie fixe, peut être commandé par le levier (52).
